**Europäisches Patentamt**

**European Patent Office**

**Office européen des brevets**

(11) Numéro de publication : **0 376 767 B1**

(12)
# FASCICULE DE BREVET EUROPEEN

(45) Date de publication du fascicule du brevet :
**18.03.92 Bulletin 92/12**

(51) Int. Cl.$^5$ : **B60T 11/20,** B60T 8/26

(21) Numéro de dépôt : **89403193.9**

(22) Date de dépôt : **21.11.89**

(54) **Maître cylindre tandem à rapport de pressions variable.**

(30) Priorité : **28.12.88 FR 8817301**

(43) Date de publication de la demande :
**04.07.90 Bulletin 90/27**

(45) Mention de la délivrance du brevet :
**18.03.92 Bulletin 92/12**

(84) Etats contractants désignés :
**DE ES FR GB IT**

(56) Documents cités :
**EP-A- 0 041 451
DE-B- 1 212 428
GB-A- 2 146 720**

(73) Titulaire : **BENDIX EUROPE Services
Techniques S.A.
126 rue de Stalingrad
F-93700 Drancy (FR)**

(72) Inventeur : **Levrai, Roland
Bendix France S.A. 126 Rue de Stalingrad
F-93700 Drancy (FR)**
Inventeur : **Thioux, Alain
Bendix France S.A. 126 Rue de Stalingrad
F-93700 Drancy (FR)**

## Description

La présente invention concerne les maîtres-cylindres tandem utilisés dans les circuits de freinage des véhicules automobiles et, plus particulièrement, un maître-cylindre tandem permettant de modifier le rapport des pressions régnant dans les deux chambres de pression.

Un tel maître-cylindre tandem trouve une application préférée dans les véhicules dont le circuit de freinage, du type I-I, comporte un système d'antiblocage des roues. Il trouve aussi une application dans les circuits de freinage du type I-I dans lesquels on souhaite modifier le rapport des pressions de freinage entre les roues avant et les roues arrière en fonction de la charge du véhicule.

Un tel maître-cylindre est, par exemple, décrit dans le document US-A-4,058,346. Selon ce document, le maître-cylindre décrit comprend un corps comportant un alésage dans lequel coulissent, de façon étanche, un piston d'entrée relié au dispositif de commande des freins d'un véhicule et un piston intermédiaire, déterminant ensemble deux chambres de pression respectivement reliées à un circuit de freinage, et comprenant également un organe de commande du rapport entre les pressions régnant dans les deux chambres.

Ce maître-cylindre comprend en outre une douille montée fixe dans la chambre en regard du piston d'entrée et dans laquelle peut coulisser de façon étanche un piston flottant de manière à séparer cette chambre en deux sous-chambres dont celle en regard du piston intermédiaire peut être reliée à un réservoir basse pression grâce à l'organe de commande.

Un tel maître-cylindre présente plusieurs inconvénients majeurs. En particulier, son coût est important du fait de la présence de cette douille et de ce piston flottant. En outre, sa longueur ne peut pas être réduite, ce qui va à l'encontre des voeux des constructeurs de véhicules automobiles.

On connaît du document GB-A-2 146 720 un maître-cylindre dont le piston intermédiaire est un piston étagé comportant deux parties présentant des diamètres différents en regard des chambres et déterminant une chambre auxiliaire pouvant être reliée par l'organe de commande, soit à la chambre de pression en regard de la partie de plus faible diamètre, soit à un réservoir sous pression atmosphérique.

Toutefois ce maître-cylindre présente encore l'inconvénient d'être de grande longueur.

L'invention a pour but d'obvier à ces inconvénients.

L'invention concerne donc un maître-cylindre du type décrit ci-dessus.

Selon l'invention, le piston intermédiaire comporte un alésage borgne ouvert dans la partie de plus grand diamètre, dans lequel coulisse de façon étanche un piston de réaction fixe par rapport au corps du maître-cylindre et déterminant à l'intérieur du piston intermédiaire la chambre auxiliaire.

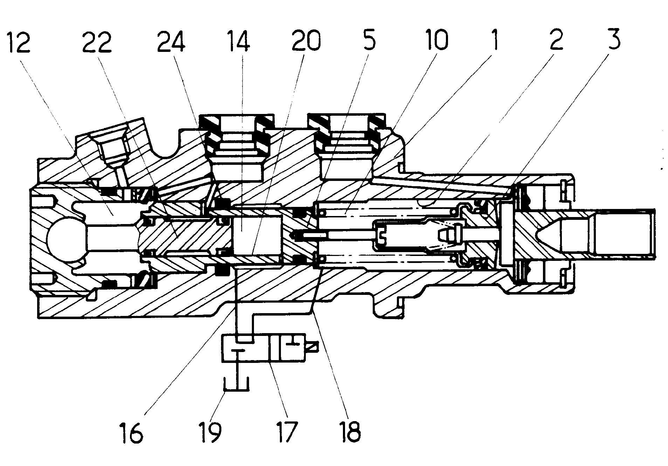

L'invention sera mieux comprise, et d'autres buts, avantages et caractéristiques apparaîtront plus clairement à la lecture de la description qui suit un mode préféré de réalisation donné à titre non limitatif et à laquelle une planche de dessin est jointe sur laquelle la Figure unique représente en coupe schématique un maître-cylindre tandem selon un mode de réalisation préféré de l'invention.

En référence maintenant à cette Figure unique on y reconnaît un maître-cylindre tandem présentant un corps 1 dans lequel est percé un alésage étagé 2 fermé par un bouchon. Un piston d'entrée 3 est relié à un dispositif de commande des freins du véhicule tel qu'une pédale de frein, par l'intermédiaire ou non d'un servofrein pneumatique (non représenté). Un piston intermédiaire 5 coulisse de façon étanche dans l'alésage où sont ainsi définies une première chambre de pression 10 entre le piston d'entrée 3 et le piston intermédiaire 5, et une deuxième chambre de pression 12, entre le piston intermédiaire 5 et l'extrémité fermée par le bouchon de l'alésage 2.

D'une manière connue en soi, chaque chambre de pression est reliée à un réservoir de liquide de frein (non représenté) et à l'un des circuits de freinage. Dans le cas présent, les circuits de freinage sont du type I-I, c'est à dire que la chambre 10 est reliée au circuit de freinage des roues avant du véhicule, tandis que la chambre 12 est reliée au circuit de freinage des roues arrière du véhicule.

Le piston intermédiaire 5 est un piston étagé dont la partie de plus faible diamètre est en regard de la chambre 10, tandis que celle de plus grand diamètre est en regard de la chambre 12. Ce piston intermédiaire 5 comporte un alésage intérieur borgne 20 ouvert du côté de la chambre 12 et dans lequel coulisse de façon étanche un piston de réaction 22 qui est fixe par rapport au corps 1 du maître-cylindre. Au moins un joint d'étanchéité 24 interdit au liquide de frein de passer d'une chambre à l'autre.

Le piston de réaction 22 détermine donc dans l'alésage borgne 20 une chambre auxiliaire 14 dite de réaction.

Un conduit 16 relie cette chambre auxiliaire 14 à l'une des entrées d'une électrovanne 17 représentée schématiquement, dont l'autre entrée est reliée par un conduit 18 à la chambre 10.

L'électrovanne 17 a en outre une sortie reliée à un réservoir de fluide sous pression atmosphérique 19. Comme on peut le constater, l'électrovanne 17 a deux positions stables, la première dans laquelle les deux conduits 16 et 18 sont reliés entre eux, le réservoir 19 étant isolé, et la seconde dans laquelle le conduit 18 est isolé et le conduit 16 est relié au réservoir 19.

Le fonctionnement est le suivant.

Lorsque l'on souhaite un premier rapport entre les pressions régnant dans les chambres 10 et 12, on met l'electrovanne 17 dans la première position. Dans ce cas, les chambres 10 et 14 communiquent et la pression régnant dans la chambre auxiliaire 14 s'oppose à la poussée exercée sur le piston intermédiaire 5 par la pression régnant dans la chambre 10.

Lorsque l'on souhaite un second rapport entre les pressions, on met l'electrovanne 17 dans la seconde position. La chambre auxiliaire 14 se décharge alors dans le réservoir et rien ne s'oppose à la poussée exercée sur le piston intermédiaire 5 par la pression régnant dans la chambre 10.

En choisissant judicieusement le diamètre des deux parties du piston intermédiaire 5 et du piston de réaction 22, on peut obtenir différents effets en fonction du but recherché. Si l'on désire par exemple utiliser un tel maître-cylindre avec un système d'antiblocage de roues et que l'on souhaite que la pression appliquée au circuit de freinage des roues arrière chute par exemple de moitié par rapport à celle appliquée au circuit de freinage des roues avant en cas de défaillance du système d'antiblocage, tandis que ces pressions sont identiques en cas de fonctionnement normal du système antiblocage, on choisira les diverses sections du maître-cylindre de telle façon que l'on ait :

$S_1$ = Section de la partie de plus faible diamètre du piston intermédiaire 5,

$S_2$ = Section de la partie de plus grand diamètre du piston intermédiaire 5,

$S_3$ = Section du piston de réaction 22,

$S_3$ = $S_1/2$ et $S_2 - S_3 = S_1$

Dans ce cas, le premier rapport précédemment décrit correspond à l'état de défaillance du système d'antiblocage, et le second rapport correspond à l'état de fonctionnement normal du système d'antiblocage. Bien évidemment, la position de l'électrovanne 17 sera commandée avantageusement par le calculateur mis en oeuvre dans le système d'antiblocage.

L'Homme de l'Art comprendra tout l'intérêt qu'il y a à disposer ainsi d'un maître-cylindre à deux rapports possibles entre les pressions exercées dans les chambres de pression 10,12 et choisira judicieusement les sections des différents éléments du maître-cylindre de façon à atteindre le but recherché par l'utilisation d'un tel maître-cylindre.

## Revendications

1. Maître-cylindre tandem comprenant un corps (1) comportant un alésage (2), dans lequel coulissent, de façon étanche, un piston d'entrée (3) relié au dispositif de commande des freins d'un véhicule et un piston intermédiaire (5), déterminant ensemble deux chambres de pression (10,12) respectivement reliées à un circuit de freinage, et comprenant également un organe de commande (17) du rapport entre les pressions régnant dans les dites chambres (10,12), ledit piston intermédiaire (5) étant un piston étagé comportant deux parties présentant des diamètres différents en regard desdites chambres et déterminant une chambre auxiliaire (14) pouvant être reliée par ledit organe de commande (17), soit à la chambre de pression en regard de la partie de plus faible diamètre (10), soit à un réservoir basse pression (19), caractérisé en ce que ledit piston intermédiaire (5) comporte un alésage interne borgne ouvert dans la partie de plus grand diamètre, dans lequel coulisse de façon étanche un piston de réaction (22) fixe par rapport audit corps (1) et déterminant à l'intérieur dudit piston ladite chambre auxiliaire (4).

## Patentansprüche

1. Tandemhauptzylinder mit einem Körper (1), der eine Bohrung (2) aufweist, in der auf dichte Weise ein mit der Steuereinrichtung der Bremsen eines Fahrzeugs verbundener Einlaßkolben (3) und ein Zwischenkolben (5), der die Gesamtheit zweier Druckkammern (10, 12) festlegt, die jeweils mit einem Bremskreis verbunden sind und ebenfalls ein Steuerelement (17) für das Verhältnis zwischen den in den Kammern (10, 12) herrschenden Drücken besitzt, gleiten, wobei der Zwischenkolben (5) ein mehrstufiger Kolben ist, der gegenüber den Kammern zwei Teile mit verschiedenen Durchmessern besitzt und eine Hilfskammer (14) festlegt, die mittels des Steuerelementes (17) entweder mit der Druckkammer gegenüber dem Teil mit kleinerem Durchmesser (10) oder mit einem Niederdruckbehälter (19) verbunden werden kann, dadurch gekennzeichnet, daß der Zwischenkolben (5) eine in den Teil mit größerem Durchmesser geöffnete Blindinnenbohrung aufweist, in der auf dichte Weise ein Gegendruckkolben (22) gleitet, der in bezug auf den Körper (1) fest ist und im Inneren des erwähnten Kolbens die Hilfskammer (14) festlegt.

## Claims

1. Tandem master cylinder comprising a body (1) having a bore (2) in which slides sealingly an input piston (3) connected to the device for controlling the brakes of a vehicle and an intermediate piston (5), these pistons together defining two pressure chambers (10, 12) connected respectively to a brake circuit, and also including a member (17) for controlling the ratio between the pressures prevailing in said chambers (10, 12), said intermediate piston (5) being a stepped piston comprising two parts having different larger diameters facing said chambers and defining an auxiliary chamber (14) which can be connected by means of said control member (17) either to the pressure chamber facing the part of smaller diameter (10) or to a low-pressure reservoir (19), characterized in that said intermediate piston (5) has a blind inner bore which opens into the part of larger diameter and in which slides sealingly a reaction piston (22) stationary in relation to said body (1) and defining said auxiliary chamber (14) within said piston.